# FASCICULE DE BREVET EUROPEEN

(11) **EP 0 956 418 B1**
(45) Date de publication et mention de la délivrance du brevet: **02.07.2003**
(21) Numéro de dépôt: 97951304.1
(22) Date de dépôt: 11.12.1997
(51) Int. Cl.: E06B 1/28

(54) **PROFIL D'HUISSERIE EN PVC POUR PORTES ET BLOCS-PORTES AVEC SYSTEMES DE GAINES POUR LES PASSAGES DES CANALISATIONS**
ZARGENPROFIL AUS PVC FÜR TÜREN UND FERTIGTÜREN MIT VERDECKTEN INSTALLATIONSKANÄLEN FÜR LEITUNGSDURCHFÜHRUNGEN
PVC DOOR FRAME PROFILE FOR DOORS AND READY-MADE DOOR UNITS WITH SHEATHING SYSTEMS FOR THE PASSAGE OF CONDUITS

(30) Priorité: 12.12.1996 FR 9615531
(43) Date de publication de la demande: 17.11.1999
(73) Titulaire: Deniel, Louis Jean Michel Jacques, 22830 Plouasne (FR)
(72) Inventeur: Deniel, Louis Jean Michel Jacques, 22830 Plouasne (FR)
(86) Numéro de dépôt international: FR9702265
(87) Numéro de publication internationale: WO98026147

(56) Documents cités:
- EP-A- 0 113 981
- EP-A- 0 399 388
- DE-U- 29 507 846
- FR-A- 2 225 604
- FR-A- 2 398 401
- FR-A- 2 419 375
- FR-A- 2 692 731

## Description

La présente invention concerne un profil d'huisserie en chlorure de polivynile PVC pour huisseries et blocs-portes avec un système de gaines ouvertes longitudinalement pour le passage de canalisations. Chaque gaine ouverte est close par un habillage amovible qui permet de visiter ou de modifier à volonté les installations qui passent dans ces gaines indépendantes. ( Electricité, téléphone, télévision, informatique, hi-fi, etc.)

Avant la présente invention ces huisseries et blocs-portes étaient réalisés en bois, (chêne, sapin, bois exotique, etc ) ou en aluminium, ou en acier. Ces deux métaux n'apportant pas grande satisfaction pour les canalisations électriques ou informatiques. Nous connaissons aussi le brevet FR-A-2 225 604 concernant un profil en PVC pour huisseries qui comporte des gaines indépendantes qui peuvent être utilisées pour les passages des canalisations, mais elles sont closes et on ne peut les visiter à volonté.

De nouvelles techniques de construction sont apparues. En plus des cloisons traditionnelles (brique, plâtre, etc..) sont arrivées des cloisons sèches (plaques de plâtre cartonnées, panneaux de particules, cloisons techniques creuses, etc..)

Plusieurs techniques sont proposées pour désolidariser les cloisons des planchers de béton ou autres, certains vont même jusqu'à proposer divers systèmes de plinthes dites « électriques ou goulottes » qui permettent d'y intégrer les canalisations éiectriques, téléphoniques, etc.. En plus de leurs commodités techniques ces éléments ont l'avantage de présenter une finition parfaite sans avoir jamais recours à la peinture. Ces systèmes particulièrement fiables et intéressants sont toujours bloqués par les huisseries et blocs-portes qui interdisent la continuité logique et visitable du passage des diverses canalisations.

La présente invention permet de remédier à cet inconvénient tout en offrant des possibilités d'entretien, de réparation, de contrôle, d'amélioration et de décoration particulièrement intéressants.

Le profil de cette huisserie s'adapte à toutes les cloisons de distribution et de doublage, aux cloisons sèches ou traditionnelles, dans toutes les épaisseurs possibles quelque soit la nature de ces cloisons. Le PVC rigide employé pour cette fabrication « monobloc » assure une grande longévité à la construction, sans déformation ni entretien.

Le nettoyage de ces huisseries en PVC sera tout simplement limité à l'entretien normal des murs, avec au maximum quelques lessivages.

La réalisation industrielle ou non, l'assemblage et la pose de ces huisseries et blocs-portes en utilisant la présente invention se feront sous la totale responsabilité des utilisateurs qui devront se référer aux recommandations définies ici.

Le débit ou coupe sera fait au moyen d'une scie mécanique travaillant en coupes à 90 ou à 45° ou de deux lames à 45° formant des entailles en « V ». Les assemblages seront à sec ou au mieux soudés selon les techniques habituelles au PVC.

Les régales, ou feuillures à briques seront adaptées à l'épaisseur des cloisons par refente en usine, avant assemblage.

Les joints de caoutchouc ne sont pas indispensables mais assureront un produit plus étanche à l'air et aux bruits. Les portes seront plus agréables à utiliser.

Les dessins annexés illustrent l'invention.

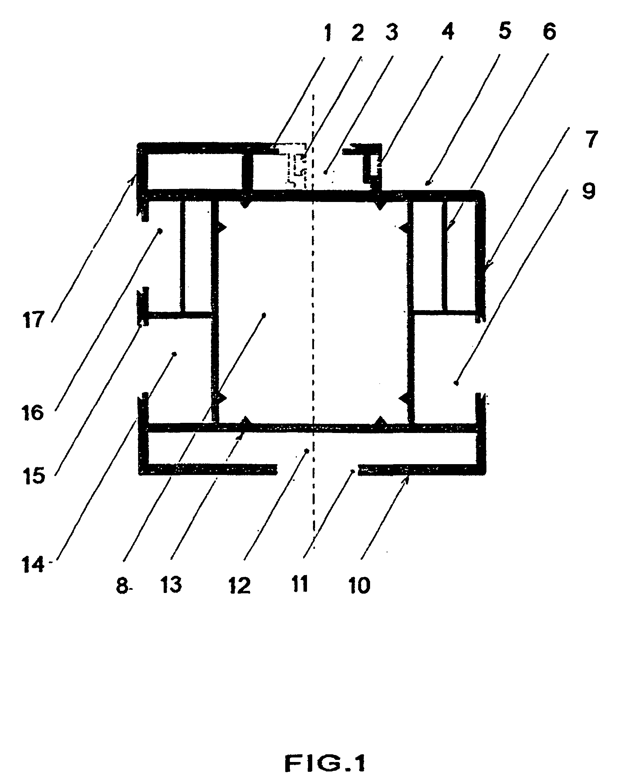

La figure 1 représente en coupe le profil de base de l'invention avec des habillages démontés, avec en référence :
1 et 15 : les rainures pour recevoir les habillages clippables et démontables qui vont obstruer les gaines de canalisations.
2 : en pointillé la joue de feuillure pour les portes de 40 mm en bois ou les portes en PVC, classiques mais avec recouvrements.
3 : la gaine pour le vissage des renforts métalliques et fixation des vérins de pose.
4 : la rainure de fixation du joint de battement, ou des barres d'écartement.
5 : la feuillure pour les portes bois à recouvrement.
6 : la joue de renfort pour le vissage des paumelles placée en 7 .
8 : la chambre réservée au renfort métallique. (S'il y a lieu)
9, 14, 16 : gaines pour les passages des canalisations d'électricité, téléphone, etc..
10 : partie de l'huisserie qui sera refendue pour s'adapter à l'épaisseur de la cloison de la cloison demandée : 20, 30, 50, 70 mm ou autres.
11: rainure pour les fixations des pattes à scellement à clipper, vérins de pose, clips et habillages pour murs épais.
12 : régale, ou feuillure à briques.
13 : ergot de calibrage pour le renfort métallique.
17 : corps du profil à l'épaisseur adaptée pour un classement au feu connu par l'homme de métier sous la référence Ml.

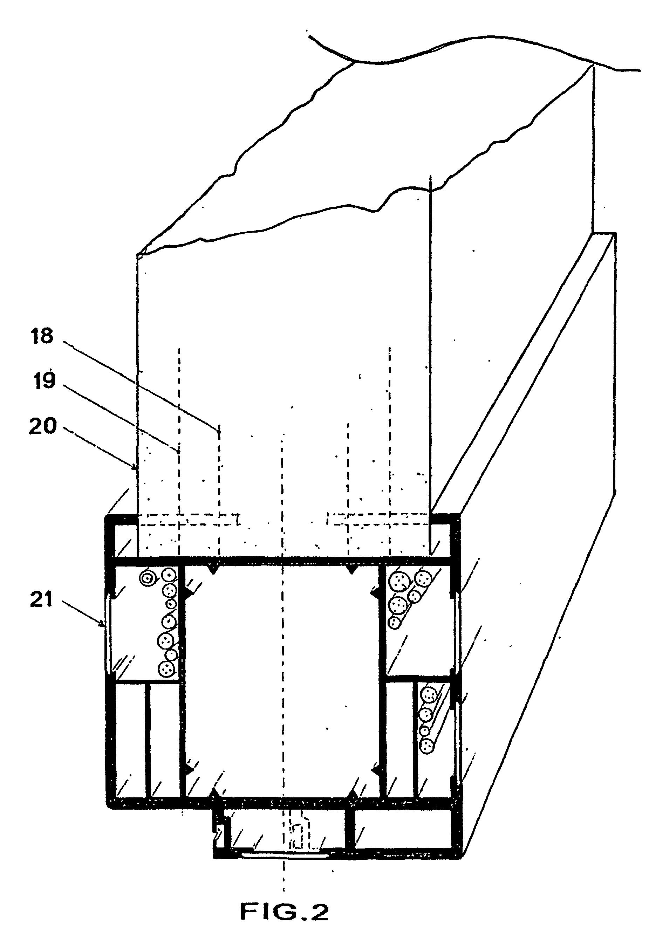

La figure 2 représente en coupe avec projection en perspective le profil de l'huisserie avec une cloison de 70 mm.

En référence à cette figure :
21 : l'habillage destiné à obstruer les gaines des canalisations.

Cet habillage se démonte facilement pour retrouver sa place après travaux ou pour permettre la pose d'un habillage décoratif.
20 : en trait plein le dessin de la cloison de 70 mm.
19 : en pointillés l'épaisseur de la cloison de 50 mm.
18 : en pointillés l'épaisseur de la cloison de 30 mm.

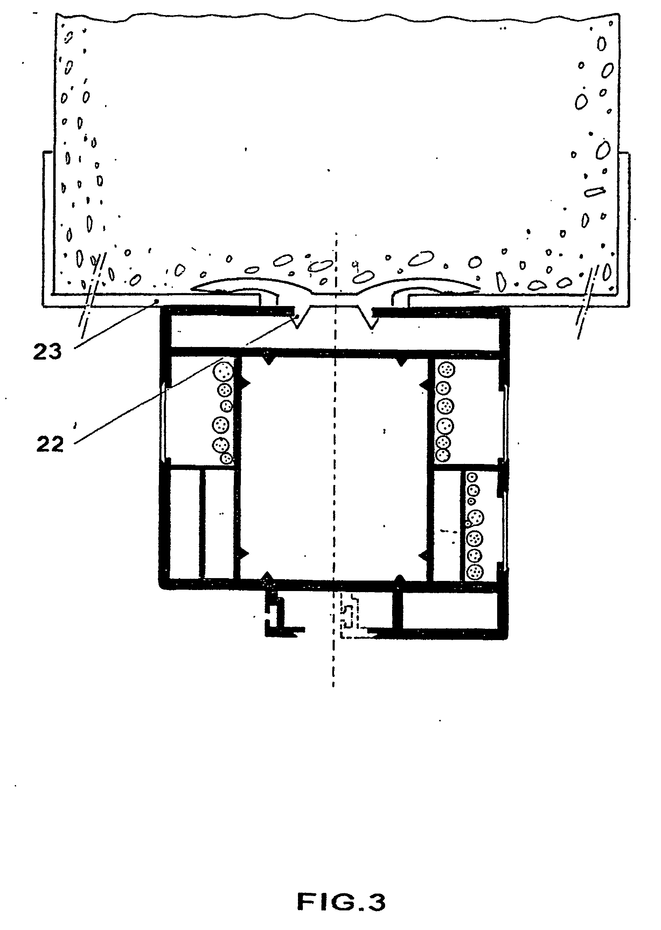

La figure 3 représente en coupe le profil de l'huisserie avec le système permettant son emploi sur des murs porteurs ou épais. En référence à cette figure :
23 : l'habillage de cotes variables et adapté à l'épaisseur du mur.
22 : le clip à habillages placé en continu ou par éléments de 20cm pour retenir les habillages. Il sera clippé et collé. Les faces en contact avec l'habillage sont striées.

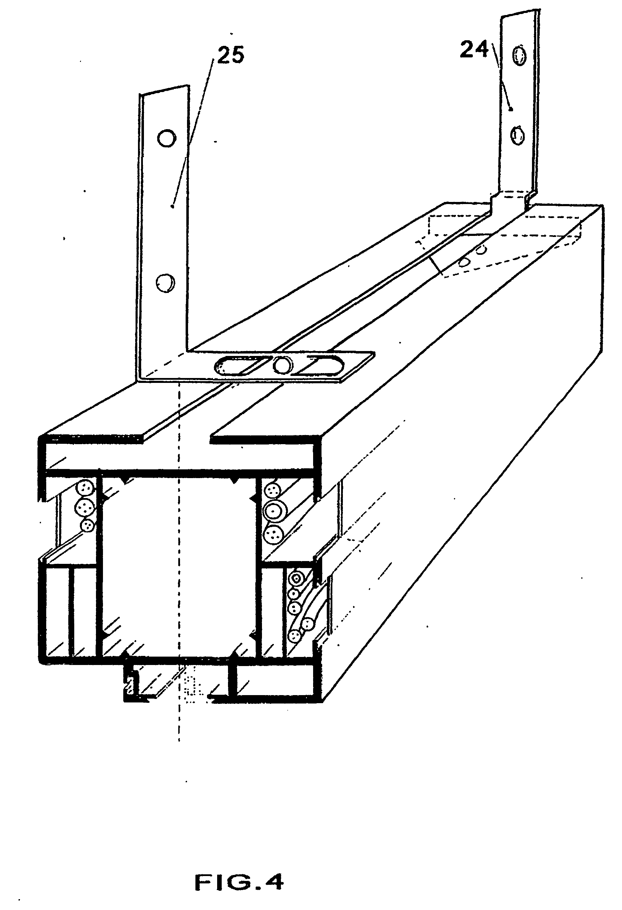

La figure 4 représente en coupe et perspective quelques modes de fixation de l'huisserie au mur et au plancher de béton.
25 : la patte à scellement clippable est pliée en fonction de l'angle voulu, elle se tient seule à l'huisserie et sera fixée au mur par scellement au ciment, scellement au pistolet ou vis et cheville.
24 : la patte à scellement prévue pour les pieds d'huisserie se clippe dans la régale à briques, s'adapte à tous les délignages, son contre coudage la tient au dessus de l'arasement du pied de l'huisserie pour éviter qu'elle se dépasse . Elle peut être retenue par des vis. Elle convient par ailleurs à tous modes de fixation.

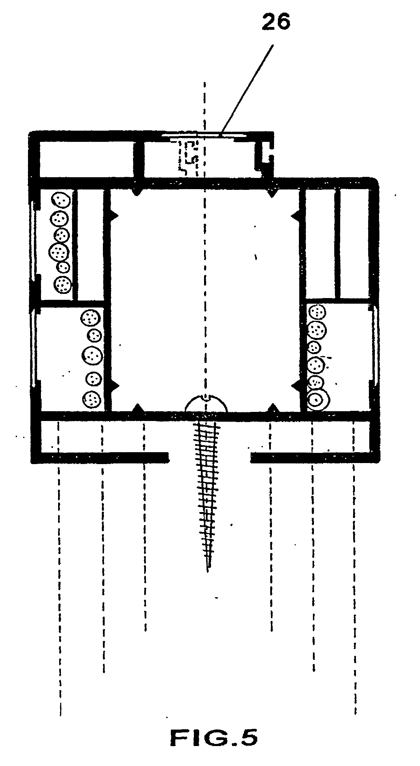

La figure 5 représente en coupe le principe de fixation des cloisons sèches, pleines, dans toutes leurs épaisseurs.

Les vis pénètrent par la chambre qui se trouve à coté de la feuillure à porte.

Cette chambre sera fermée par un cache clippable 26.

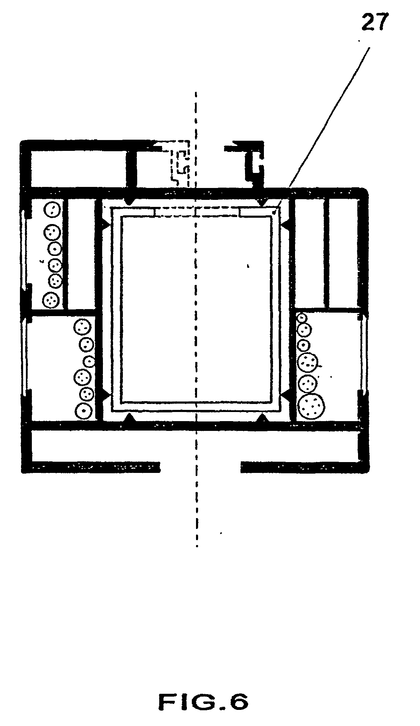

La figure 6 représente en coupe le profil de l'huisserie avec son renfort métallique 27, utilisable en cas de besoin et de grande portée. Ce renfort est en U avec ailes, il peut être rectangulaire, soudé ou non. Il sera fixé à l'huisserie PVC par des vis auto-foreuses placées tous les 35 cm.

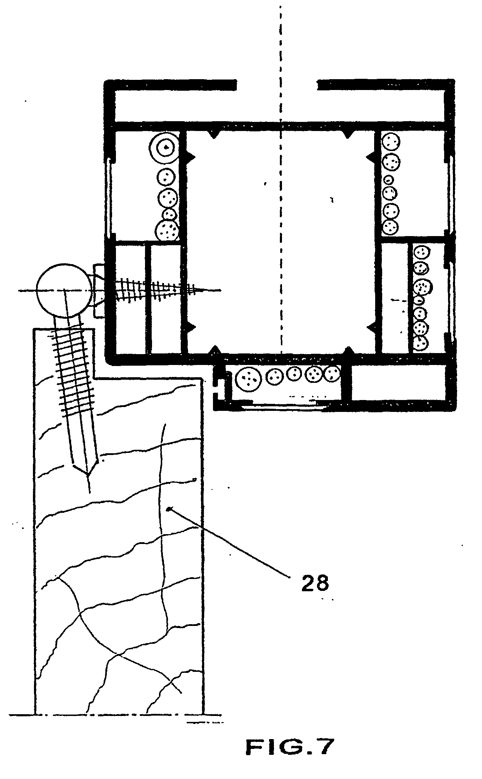

La figure 7 représente en coupe l'huisserie avec les habillages amovibles de ses gaines et le système de ferrage d'une porte bois 28 de 4O mm d'épaisseur, à recouvrement. Le système de fiche sur la porte 28 permet un réglage facile par simple vissage.

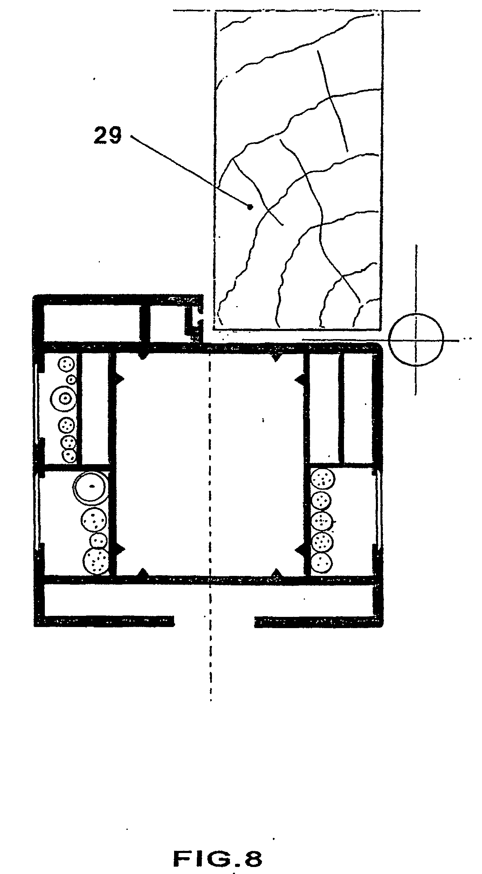

La figure 8 représente en coupe l'huisserie avec les habillages de ses gaines et le système de ferrage d'une porte 29 en bois de 40mm d'épaisseur avec ferrage en feuillure.

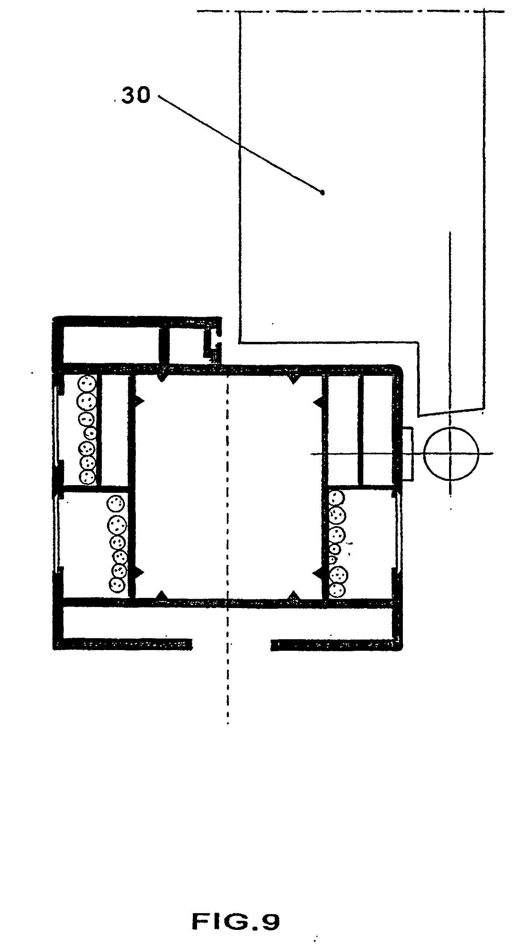

La figure 9 représente en coupe l'huisserie avec ses habillages de gaine et le système avec porte 3O en PVC et un ferrage à recouvrement, et la possibilité d'étancher cette menuiserie avec deux joints de frappe.

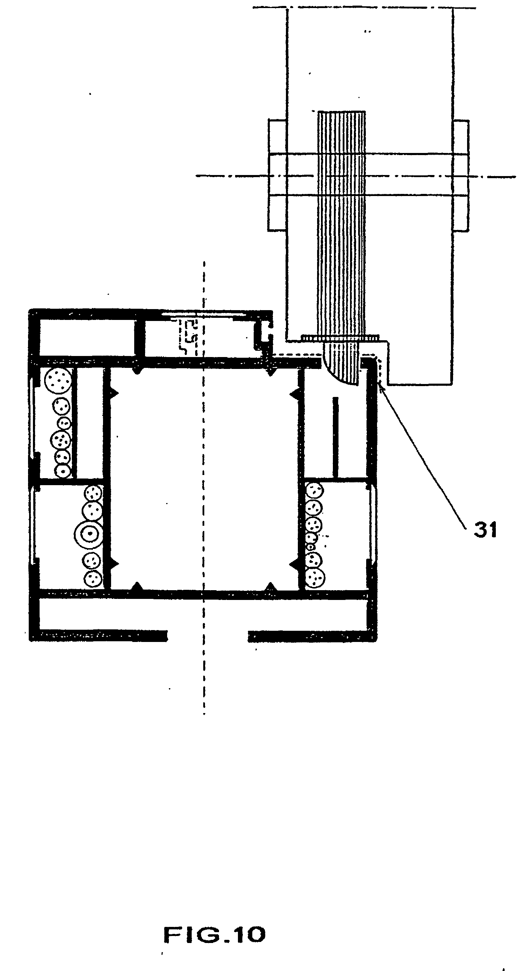

La figure 10 représente en coupe l'huisserie avec une porte à recouvrement, les habillages des gaines et une serrure dont le pêne trouvera son réceptacle par une simple entaille dans l'huisserie PVC. Cette entaille pourra être agrémentée d'une gâche 31 en acier inoxydable avec un arrondi. (voir le pointillé de l'angle de la feuillure de porte).

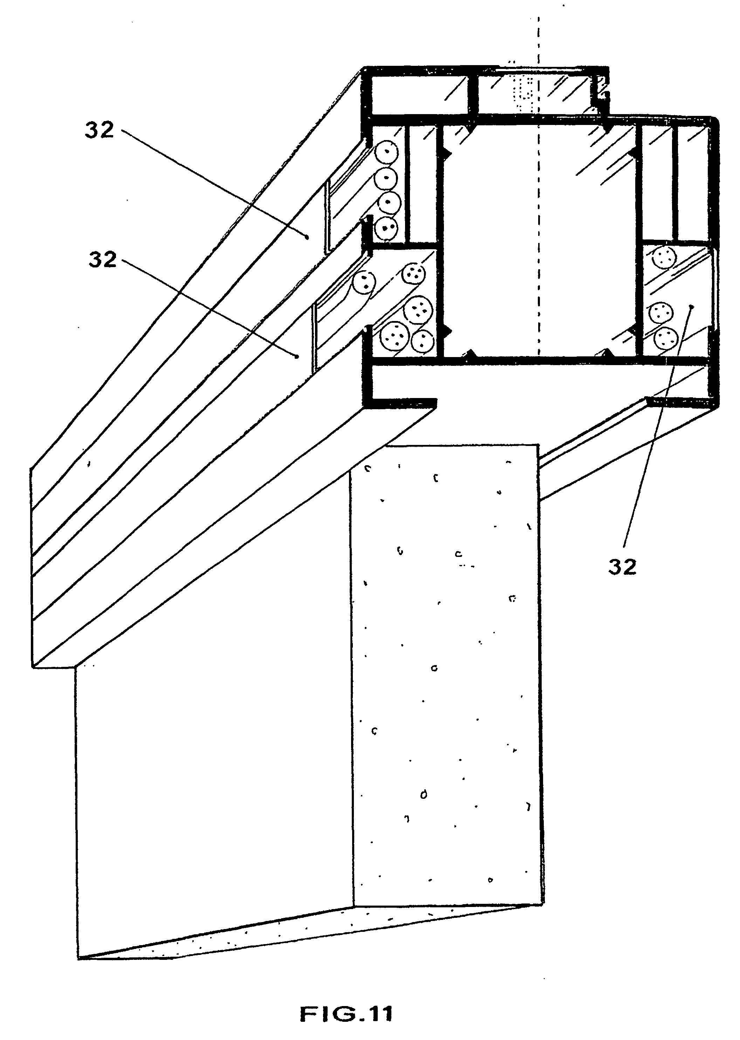

La figure 11 représente en coupe avec projection en perspective l'huisserie avec un élément de cloison de 50 mm . Les joues de la régale sont délignées à ses cotes. Les habillages des gaines donnent une idée précise du nombre de canalisations 32 qui peuvent trouver leur place dans ce type d'huisserie.

On notera que ces habillages 32 sont préalablement posés en usine et réalisés en une matière plastique qui ne se soude pas afin de faciliter leurs démontages et remontages.

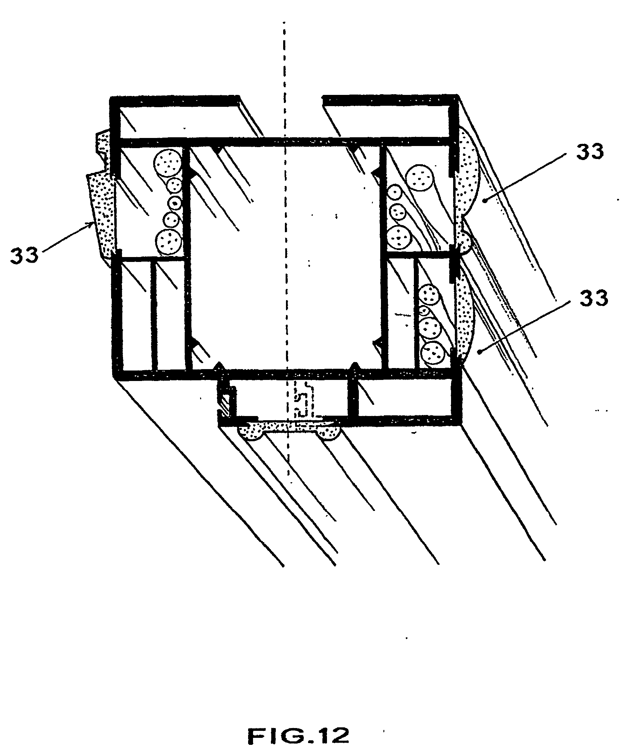

La figure 12 représente en coupe avec projection en perspective l'huisserie avec des habillages décoratifs de ses gaines. Il est à noter que ces habillages décoratifs 33 sont prévus pour remplacer lesdits habillages 32 préalablement posés en usine, et qu'ils peuvent varier dans leurs formes et dans leurs couleurs.

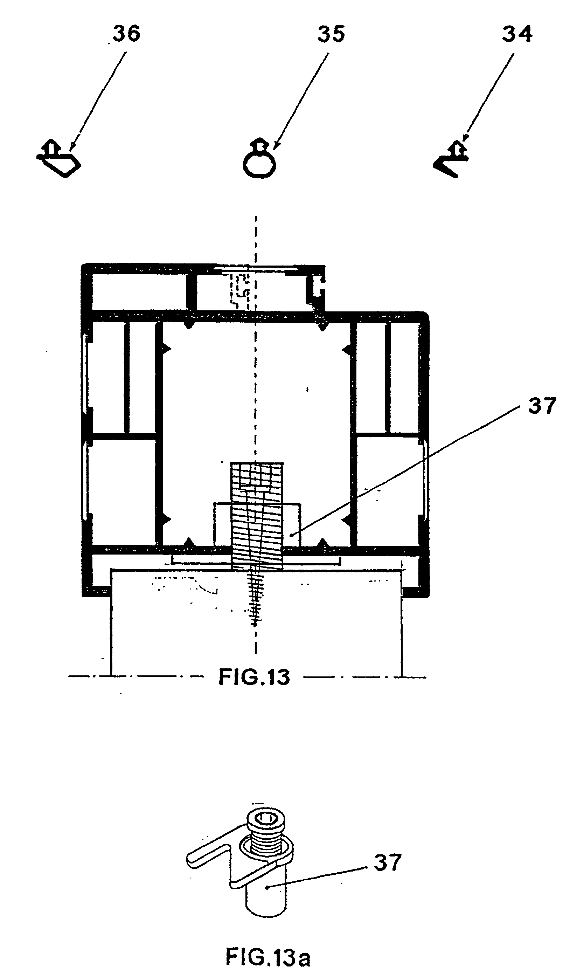

La figure 13 représente en coupe l'huisserie avec une cloison de 70 mm.

En référence à cette figure, le dispositif représente en regard du profil qui est pourvu d'un vérin de pose 37 avec vis de fixation, un système de joints dont un joint à lèvres 34, un joint tubulaire 35, un joint triangulaire 36. Tous les joints 34, 35, 36 utilisés sont anti-bruit et anti-poussière.

La figure 13a est une vue en perspective dudit vérin de pose 37. On notera que ce dernier participe à l'isolation phonique de l'ensemble porte-huisserie.

On notera que les gaines du profil d'huisserie selon l'invention sont indépendantes et closes et visitables. De plus le profilé du renfort 27 est avantageusement constitué d'acier.

On notera également que le profil est également adapté à des portes en verre ou en aluminium. Il est à noter que l'entaille précitée dudit profilé d'huisserie est destinée à recevoir des moyens de fermeture ou de fixation, tels qu'un pêne ou des rouleaux de crémones par exemple.

## Revendications

1. Profil d'huisserie et de bloc - porte en PVC comportant des gaines indépendantes **caractérisé en ce que** ces gaines (9, 14, 16 ) sont ouvertes longitudinalement sur l'extérieur et obstruées par des habillages (32, 33 ) facilement démontables de l'extérieur, les dites gaines permettant le passage des canalisations d'électricité, téléphone, télévision et autres.

2. Profil selon la revendication 1, **caractérisé en ce que**, pour la fermeture des gaines de passages des canalisations ou fils électriques, ou téléphoniques, ou autres, les habillages (32 ) sont préalablement posés en usine et réalisés en une matière plastique qui ne se soude pas afin de faciliter les démontages et remontages selon les visites à effectuer aux installations.

3. Profil selon la revendication précédente, **caractérisé en ce que** le profil est adapté pour remplacer lesdits habillages (32 ) préposés en usine par d'autres habillages décoratifs (33 ) de formes et de couleurs diverses.

4. Profil selon l'une quelconque des revendications précédentes, **caractérisé en ce qu'**il comporte des moyens prévus pour visser de l'intérieur même de l'huisserie des fixations aux cloisons sèches ou aux cloisons techniques, lesdites fixations étant totalement cachées par un clip de fermeture (26 ) parfaitement amovible.

5. Profil selon l'une quelconque des revendications précédentes, **caractérisé en ce qu'**il comporte un jeu de feuillures (2, 5 ) comportant une rainure (4 ) pour la fixation de systèmes de joints adaptés aux portes utilisées, les joints (34, 35, 36 ) desdits systèmes étant anti-bruit et anti-poussière, et **en ce qu'**il comporte un système de vérin (37 ) facilitant la pose des huisseries et participant aussi à l'isolation phonique de l'ensemble.

6. Profil selon l'une quelconque des revendications précédentes, **caractérisé en ce qu'**il comporte une chambre (8 ) permettant d'y introduire un profil d'acier de renfort (27) qui peut être utile dans le cas de grandes portées ou de charges importantes.

7. Profil pour huisseries et blocs-portes selon l'une quelconque des revendications précédentes, **caractérisé en ce qu'**il est prévu pour coopérer avec les systèmes (24, 25 ) de pattes à scellement clippables ou à visser, lesquelles sont destinées à être fixées par des moyens tels que du ciment, du plâtre, de la colle, un pistolet à scellement, des chevilles et vis, lesdits systèmes étant prévus pour permettre la pose dudit profil.

8. Profil pour huisseries et blocs-portes selon la revendication 6 **caractérise en ce que** lesdits profils de renfort (27 ) sont constitués d'un profil d'acier fermé et de section adaptée, ou bien de section en forme de U.

9. Profil d'huisseries et de blocs-portes selon l'une quelconque des revendications précédentes, **caractérisé en ce qu'**il comporte une partie creusée pouvant recevoir par vissage une gâche (31 ) prévue pour permettre la fermeture de l'une quelconque desdites portes, ladite partie creusée étant aussi destinée à recevoir des moyens de fermeture ou de fixation, tels qu'un pêne ou des rouleaux de crémones .

## Claims

1. Poor frame and unit section - PVC door including separate shells **characterised in that** those shells (9, 14, 16) are open longitudinally onto the outside and obstructed by coverings (32, 33) casily removable from outside, said shells accommodating power, telephone, television and other ducts.

2. Section according to claim 1, **characterised in that**, to close the duct or electric, telephone or other wire shells, the covering (32) are first factory mounted and made of plastic that cannot weld in order to facilitate the disassembling and assembling according to facility inspections to be carried out..

3. Section according to previous claim, **characterised in that** the section is adjusted to replace said factory mounted covering (32) with other decorative coverings (33) with various shapes and colours.

4. Section according to any of the claims above, **characterised in that** it has means provided to screw, from inside the frame, fastenings to the dry walls or technical wals, said fastenings being totally hidden by a perfectly removable closing clip (26).

5. Section according to any of the claims above, **characterised in that** it has a set of rabbets (2,5) with a groove (4) to fasten joint systems adapted to the doors, with joints (34,35,36) of said systems being sound-resistant and anti-dust, and **in that** a jack system (37) facilitating the mounting of the frame and contribution to the overall sound insulation.

6. Section according to any of the claims above, **characterised in that** a chamber (8) to insert a reinforcing steel section (27), useful in the event of wide spans or heavy loads.

7. Section for door frames and door units according to any of the claims above, **characterised in that** it is intended to co-operate with the clippable or screwable wall anchor (24, 25) systems, whitch are intended to be fastened by means such as cement, plaster, glue, an anchoring gun, pegs and screws, said system being intended to allow the mounting of the said profile.

8. Section for door frames and door units according to claim 6 **characterised in that** said reinforcing sections (27) are made up of a steel section with a suited section or of the U-shaped section.

9. Section for door frames and door units according to any of the claims above, **characterised in that** it has a hollow section accommodating a screwed catch latch (31) intended to allow the closing of any of the said doors, said hollow section being also intended to accommodate closing or fastening means, such as a sliding bolt or bascule rollers.

## Patentansprüche

1. Zargen- oder Türstockprofil aus PVC, das unabhängige Leitungskanäle besitzt, die **dadurch gekennzeichnet sind, daß** diese Leitungskanäle (9, 14, 16) zur Außenseite hin in ihrer Längsrichtung offen und durch die von außen leicht abzunehmenden Verkleidungen (32, 33) verdeckt sind wobei diese Leitungskanäle die Durchführung von Strom-, Telefon-, Fernseh-und anderen Leitungen ermöglichen.

2. Profil gemäß Anspruch 1., das dadurch gekenneichnet ist, daß die Verkleidungen (32) für den verschluß der zur Durchführung von Strom-, Telefon- oder anderen Leitungen dienenden Leitungskanäle vorher im Werk angebracht werden und aus einem Kunststoff bestehen, der nicht verschweißt wird, um die bei der Überprüfung der Anlagen vorzunehmenden Demontage- und Montagearbeiten zu erleichtern.

3. Profil gemäß dem vorstehenden Anspruch, das **dadurch gekennzeichnet ist, daß** das Profil dafür geeignet ist, die im Werk schon vorher angebrachten Verkleidungen (32) durch andere dekorative Verkleidungen (33) von unterschiedlichen Formen und Farben zu ersetzen.

4. Profil gemäß einem beliebigen der vorangegangenen Ansprüche, das **dadurch gekennzeichnet ist, daß** an ihm Mittel vorgesehen sind, um von der Innenseite der Zarge aus Befestigungen an den Trockenbau- oder technischen Wänden anzuschrauben, wobei diese Befestigungen durch einen in Gänze abnehmbaren clip (26) vollständig verdeckt werden.

5. Profil gemäß einem beliebigen der vorangegangenen Ansprüche, das **dadurch gekennzeichnet ist, daß** es einen Satz von Falzen (2,5) mit einer eine Nut (4) für die Befestigung eines für die eingesetzte Tür geeigneten Systems von Dichtungen (34, 35, 36) besitzt, wobei diese Systeme den Lärmschutz und den Staubschutz gewährleisten, sowie dadurch, daß es ein System von Stellgliedern (37) besitzt, das den Einbau der Zargen erleichtert und auch an der Schalldämmung der gesamten Baueinheit teilhat.

6. Profil gemäß einem beliebigen der vorangegangenen Ansprüche, das **dadurch gekennzeichnet ist, daß** es eine Kammer (8) besitzt, in die zur Verstärkung ein Stahlprofil (27) eingesetzt werden kann, was sich bei großen Spannweiten oder erheblichen Belastungen als nützlich erweisen kann.

7. Zargen- oder Türstockprofil gemäß einem beliebigen der vorangegangenen Ansprüche, das **dadurch gekennzeichnet ist, daß** es so gestaltet ist, daß es mit Systemen von einrastenden oder schraubbaren Kopfankern (24,25) zusammenwirken kann, die für eine Befestigung mit solchen Mitteln wie Zement, Gips, Leim, Schußgerät, Dübel und Schraube bestimmt und dafür vorgesehen sind, den Einbau dieses Profils zu ermöglichen.

8. Zargen- oder Türstockprofil gemäß Anspruch 6, das **dadurch gekennzeichnet ist, daß** die genannten Profile (27) fiir die Verstärkung aus einen geschlossenen Stahlprofil entsprechenden Querschnitts oder mit einem U- förmigen Querschnitt bestehen.

9. Zargen- oder Türstockprofil gemäß einem beliebigen der vorangegangenen Ansprüche, das **dadurch gekennzeichnet ist, daß** es einen hohlen Teil besitzt, an dem mit Schrauben ein Schließblech (31) befestitgt werden kann, das dazu bestimmt ist, das Verschließen der genannten Türen zu ermöglichen, wobei dieser hohle Teil auch dazu dienen kann, solche Mittel für das Verschließen oder Befestigen wie einen Riegel oder die Rollen von Baskülverschlüssen aufzunehmen.
